# EUROPÄISCHE PATENTSCHRIFT

(11) **EP 2 803 616 B1**
(45) Veröffentlichungstag und Bekanntmachung des Hinweises auf die Patenterteilung: **16.06.2021**
(21) Anmeldenummer: 14180212.4
(22) Anmeldetag: 18.01.2012
(51) Int. Cl.: F24H 3/02, E06C 1/38, F03D 13/10, B66B 19/00, B66B 9/187, E06C 7/16, E06C 9/02, E06C 7/12, E04G 3/24, E04H 12/34, E04G 21/24, B66C 1/10, E04G 21/14, F02C 6/18, E04B 1/04, E04G 3/28, E04G 5/00, E04H 12/12, F23H 3/02, F16B 35/06

(54) **Arbeitsbühnenvorrichtung zum Arbeiten in verändlicher Höhe und Verfahren dafür**
Working platform device to work in a varying height und method therefor
Dispositif de plate-forme de travail pour travailler à hauteur variable et méthode correspondante

(30) Priorität: 26.01.2011 DE 102011003164
(43) Veröffentlichungstag der Anmeldung: 19.11.2014
(62) Teilanmeldung aus: 12700685.6
(73) Patentinhaber: Wobben Properties GmbH, 26607 Aurich (DE)
(72) Erfinder: van Ohlen, Hermann, 26529 Upgant-Schott (DE); Hölscher, Norbert, 26607 Aurich (DE); Honczek, Michael, 26632 Ihlow (DE); Kapitza, Jan, 26629 Großefehn (DE); Buck, Ralf, 26736 Krummhörn (DE)
(74) Vertreter: Eisenführ Speiser

(56) Entgegenhaltungen:
- DE-A1- 10 104 351
- US-A1- 2009 107 062
- US-A1- 2009 284 012

## Beschreibung

Die vorliegende Erfindung betrifft eine Arbeitsbühnenvorrichtung zum Arbeiten in veränderlicher Höhe in einem Turm oder Turmabschnitt einer Windenergieanlage und ein Verfahren zum Errichten eines Turms einer Windenergieanlage.

Verfahren zum Errichten eines Turms einer Windenergieanlage, insbesondere eines Betonturms, sind grundsätzlich bekannt. Zunächst wird ein Betonfundament vorgesehen. Ein Betonturm in Fertigbauweise ist aus mehreren Turmsegmenten zusammengesetzt. Solche Turmsegmente können als rohrförmige und damit zylinderähnliche Elemente, nämlich im Gegensatz zu einem Zylinder mit leicht konischer Form, vorgesehen sein. Bei größeren Turmdurchmessern kommt auch eine Unterteilung in Umfangsrichtung in Betracht, so dass beispielsweise zwei im Querschnitt etwa halbkreisförmige Element oder andere teilkreisförmige Segmente zusammengesetzt werden.

Zunächst werden ein Turmsegment oder mehrere Turmsegmente als erste unterste Turmebene auf dem Fundament aufgesetzt. Es ist wichtig, dass diese erste Ebene sehr sorgfältig ausgerichtet, nämlich ausnivelliert wird. Hierfür wird dieses erste Segment bzw. mehrere Segmente genau ausnivelliert und in dieser ausnivellierten Position zunächst zumindest provisorisch fixiert, um dann zwischen Fundament und diesem untersten Turmsegment bzw. diesen untersten Turmsegmenten eine Ausgleichsmasse einzufügen, die schließlich aushärtet und diese nivellierte Ausrichtung fixiert.

Problematisch hierbei ist, dass die Aushärtung der Ausgleichsmasse eine gewisse Mindesttemperatur benötigt. Bei niedrigen Außentemperaturen um den Gefrierpunkt kann sich das Aushärten signifikant verlängern oder vollständig scheitern. Dies führt zum einen zu der Gefahr einer schlecht oder unvollständig ausgehärteten Ausgleichsmasse. Andererseits können durch das Abwarten einer verlängerten Aushärtedauer längere Standzeiten für beispielsweise einen zur Installation benötigten Kran resultieren. Ein solcher Kran, der bereits das/die erste(n) Turmsegment(e) auf das Fundament gehoben hat, bleibt für die Dauer des Aushärtens dieser Ausgleichsmasse ungenutzt. Es ergeben sich somit kostspielige zusätzliche Standzeiten des Krans.

Im Weiteren wird der Turm sukzessive aufgebaut, indem weitere Turmsegmente auf den bis dahin aufgebauten Teilturm aufgesetzt werden. Die hierfür notwendigen Arbeiten entstehen somit zunehmend in höherer Höhe. Im Bereich der obersten Ebene des jeweils fertiggestellten Turmabschnitts wird somit regelmäßig ein Gerüst oder Arbeitsplattform angeordnet, auf dem Arbeiter des Aufbauteams das Aufsetzen eines neuen Turmsegmentes kontrollieren können. Hierbei muss insbesondere kontrolliert werden, dass das jeweilige neue Turmsegment an exakt der richtigen, vorgesehenen Position angeordnet wird. Mittels eines Kranes wird so jedes Turmsegment sukzessive etwa an seinen Platz gehoben und ein Kranführer führt eine Feinpositionierung des betreffenden Turmsegmentes aus. Die genaue Positionierung jedes Turmsegmentes wird dann von den Arbeitern des Aufbauteams auf der besagten Arbeitsplattform manuell, also mit Muskelkraft vorgenommen. Insbesondere muss das betreffende Turmsegment regelmäßig in die korrekte Position gedreht werden. Das Aufbaupersonal hält das so per Hand ausgerichtete Turmsegment in der korrekten Position und der Kranführer senkt das Turmsegment dann langsam ab, während das Aufbauteam dafür sorgt, dass die ausgerichtete Position beibehalten wird. Es ist dabei zu berücksichtigen, dass ein solches Turmsegment etwa 5 bis 120 t wiegen kann. Es muss somit trotz Einsatz großer Muskelkräfte eine sehr feine Positionierung vorgenommen werden.

Dieses Verfahren zum Aufsetzen eines weiteren Turmsegmentes ist somit kompliziert, zeitund arbeitsaufwändig und weist eine gewisse Fehleranfälligkeit. Zudem besteht die Gefahr von Verletzungen für die Arbeiter vor Ort, insbesondere die Gefahr von Quetschungen.

Ist das neue Turmsegment auf dem bis dahin errichteten Turm angeordnet, muss das Turmsegment von einer Traverse, mit der der Kran das Turmsegment gehoben hat, getrennt werden. Hierzu können Tragschlaufen, wie zu Schlaufen geformte Stahlseile an dem Turmsegment befestigt sein. Die Traverse wird dann von diesen Schlaufen gelöst, wie beispielsweise ausgehakt und die Stahlseilschlaufen als solche werden dann manuell von den Arbeitern auf der Arbeitsplattform von dem aufgesetzten Turmsegment entfernt. Auch dies ist aufwändig und erfordert einen recht hohen Personalaufwand einschließlich entsprechender Arbeitsplattform in der Höhe des bis dahin fertiggestellten Turms.

Ganz allgemein sei auf die Dokumente US 3,074,564 A, DE 10 2009 023 538 A1 und DE 20 2010 000 868 U1 verwiesen.

US 2009/0107062 A1 beschreibt ein Verfahren zum Anheben eines Turmsegments.

DE 101 04 351 A1 beschreibt eine Arbeitsbühnenvorrichtung zum Aufnehmen einer Person zum Arbeiten in dem Turm in veränderlicher Höhe.

Der vorliegenden Erfindung liegt somit die Aufgabe zugrunde, wenigstens eines der oben aufgezeigten Probleme zu beheben oder zu verringern, insbesondere den Aufbau eines Turms einer Windenergieanlage effizienter zu gestalten, insbesondere den Aufbau eines Betonturms. Zumindest soll eine alternative Lösung vorgeschlagen werden.

Erfindungsgemäß wird eine Arbeitsbühnenvorrichtung zum Arbeiten in veränderlicher Höhe in einem Turm oder Turmabschnitt einer Windenergieanlage gemäß Anspruch 1 vorgeschlagen. Diese Arbeitsbühnenvorrichtung ist zum Aufbauen eines Turmes vorgesehen und insoweit zur Verwendung in einem teilweise fertiggestellten Turm, der auch als Turmabschnitt bezeichnet werden kann. Die Arbeitsbühnenvorrichtung umfasst einen Arbeitskorb zum Aufnehmen einer Person zum Arbeiten in dem Turm in veränderlicher Höhe. Der Arbeitskorb ist insoweit dazu vorbereitet, insbesondere jeweils im Bereich des obersten zurzeit angeordneten Turmabschnitts bereitgestellt zu werden. Hierbei wird von einem Turm einer Windenergieanlage ausgegangen, der segmentweise zusammengesetzt wird, also insbesondere durch übereinander Anordnen von Turmsegmenten. Dies können vorzugsweise Turmsegmente eines Betonturms sein, also Betonsegmente. Eine Anwendung in einem Stahlturm kommt gleichwohl auch in Betracht.

Die Arbeitsbühnenvorrichtung weist zudem einen Befestigungsabschnitt zum unfallsicheren Befestigen des Arbeitskorbs an einer mit einer Sicherheitsschiene versehenen Turmleiter auf. Der Befestigungsabschnitt muss also dazu ausgebildet sein, nicht nur den Arbeitskorb quasi beliebig an der Turmleiter zu befestigen, sondern in einer Art und Weise, dass unter Berücksichtigung von Unfallverhütungsvorschriften wenigstens ein Arbeiter darin sicher in der jeweiligen Höhe im Turm arbeiten kann und darf. Die Turmleiter, an der dieser Sicherheitskorb unfallsicher zu befestigen ist, weist eine Sicherheitsschiene auf in der ein Arbeiter im Turm sein Sicherheitsgeschirr bestimmungsgemäß und vorschriftsgemäß sichern kann. Hieran muss der Befestigungsabschnitt des Arbeitskorbs angepasst sein.

Gemäß einer Ausführungsform weist der Arbeitskorb einen Bodenabschnitt auf und der Bodenabschnitt kann so geöffnet werden, dass eine Bodenöffnung entsteht, durch die eine erwachsene Person, nämlich eine Person eines Aufbauteams des Windenergieanlagenturms, den Arbeitskorb nach unten verlassen kann. Entsprechend kann der Arbeitskorb nach unten geöffnet werden und das Mitglied des Aufbauteams kann den Arbeitskorb insbesondere über die Turmleiter, an der der Arbeitskorb befestigt ist, nach unten verlassen.

Vorzugsweise ist die Bodenöffnung so ausgebildet, dass die Person beim Verlassen des Arbeitskorbes durch die Bodenöffnung, wenn der Arbeitskorb an der Turmleiter befestigt ist, mit einem Sicherheitsgeschirr über einen Sicherheitsschlitten an der Sicherheitsschiene durchgängig gesichert bleiben kann, insbesondere dass die Person den Sicherheitsschlitten bei Verlassen des Arbeitskorbes in der Schiene führen kann. Mit anderen Worten wird beim Öffnen der Bodenöffnung die Sicherheitsschiene insoweit vollständig freigegeben. Die Person, die den Arbeitskorb nach unten verlassen will, kann sich somit mittels des Sicherheitsgeschirrs und dem entsprechenden Sicherheitsschlitten an der Sicherheitsschiene schon im Korb sichern, was ohnehin für den gesamten Aufenthalt im Arbeitskorb vorzusehen ist. Dann kann die Öffnung geöffnet werden, wobei die Person ununterbrochen gesichert bleibt. Schließlich kann die Person an der Turmleiter einfach nach unten aus dem Arbeitskorb die Leiter heruntersteigen. Der Sicherheitsschlitten wird dabei in ansonsten bekannter Weise in der Sicherheitsschiene geführt und es entsteht hierbei zu keinem Zeitpunkt eine für die Person ungesicherte Situation. Die Person ist während des gesamten Vorgangs durchgehend gesichert.

Gemäß einer weiteren Ausführungsform wird vorgeschlagen, die Arbeitsbühnenvorrichtung mit einem Hebemittel zu versehen. Dieses Hebemittel ist zum Befestigen an derTurmleiter vorgesehen und zum Hochziehen des Arbeitskorbes entlang der mit der Sicherheitsschiene versehenen Turmleiter aus einer ersten Arbeitsposition in eine höher gelegene zweite Arbeitsposition.

Vorzugsweise weist das Hebemittel einen Flaschenzug oder zumindest ein Umlenkmittel zum Umlenken eines Tragseils auf, wobei der Flaschenzug bzw. das Umlenkmittel zum Befestigen an der Turmleiter oder Sicherheitsschiene vorbereitet ist. Hierdurch ist es möglich, den Flaschenzug bzw. das Umlenkmittel oberhalb des Arbeitskorbes an derselben Turmleiter bzw. der damit verbundenen Sicherheitsschiene zu befestigen. Ein Ende eines Tragseils bzw. ein Ende des Flaschenzuges wird dann an einer bzw. mehreren entsprechenden Stellen des Arbeitskorbes befestigt und das andere Ende des Seils reicht zu der Person, die das Hebemittel betätigen soll. Hierbei kann diese Person zuvor den Arbeitskorb durch eine entsprechende Öffnung nach unten verlassen haben und unterhalb des Arbeitskorbes stehen. Das Seil kann durch diese Öffnung im Boden des Arbeitskorbes zu der Person reichen. Diese Person kann nun an dem Seil den Arbeitskorb nach oben in eine höher gelegene Arbeitsposition ziehen. Dies ist insbesondere vorteilhaft beim Aufbauen eines Windenergieanlagenturmes aus einzelnen Turmsegmenten, indem auf die beschriebene Art und Weise der Arbeitskorb jeweils sukzessive in den Bereich des oberen Turmsegmentes, insbesondere in die Nähe der Oberkante des obersten Turmsegmentes bewegt wird, weil dort Arbeiten auszuführen sind, wenn dort das nächste Turmsegment aufgesetzt werden soll. Vorzugsweise werden hierbei Turmsegmente mit vormontierten Turmleiterabschnitten verwendet.

Nachfolgend wird die Erfindung an Hand von Ausführungsbeispielen unter Bezugnahme auf die begleitenden Figuren beispielhaft erläutert.
- Figur 1: zeigt eine Arbeitsbühnenvorrichtung in einer perspektivischen Ansicht.

- Figur 2: zeigt ein Befestigungselement der Arbeitsbühnenvorrichtung der Figur 1 vor. bzw. nach dem Verbinden mit einer Sicherheitsschiene.
- Figur 3: zeigt das Verbindungselement der Figur 2 in einem mit der Sicherheitsschiene verbundenen Zustand.
- Figur 4: zeigt eine Arbeitsbühnenvorrichtung in einer seitlichen Ansicht.
- Figur 5: zeigt eine Arbeitsbühnenvorrichtung in einer seitlichen, teilweise geschnittenen Ansicht gemäß einer weiteren Ausführungsform.
- Figur 6: zeigt einen Teil einer Arbeitsbühnenvorrichtung in einer Rückansicht zusammen mit einer Turmleiter.
- Figur 7: zeigt eine Auflagevorrichtung zum Halten der Arbeitsbühnenvorrichtung an einer Turmleiter.

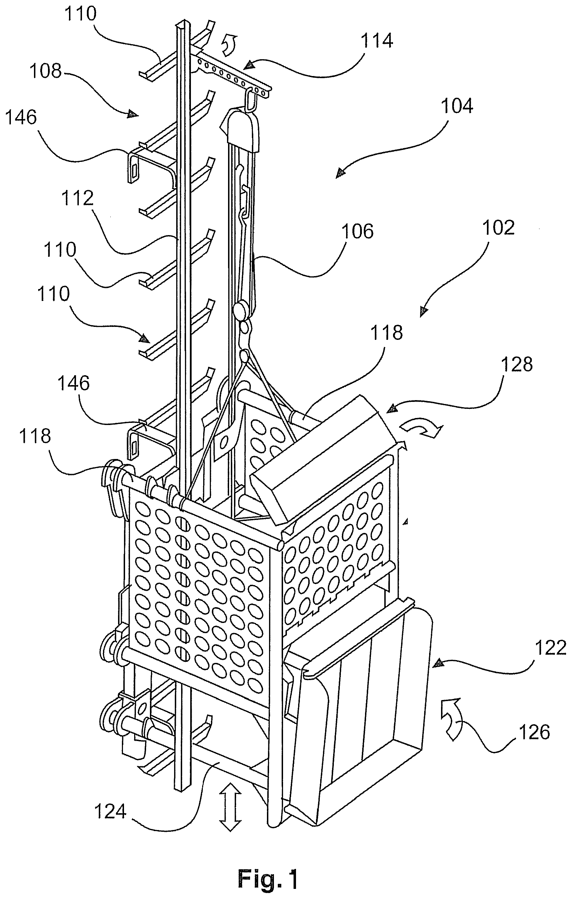

Die Arbeitsbühnenvorrichtung 100 der Figur 1 umfasst einen Arbeitskorb 102 und ein Hebemittel 104, das einen Flaschenzug 106 aufweist. Die Arbeitsbühnenvorrichtung 100 ist dabei an einer Turmleiter 108 befestigt, die mit Leitersprossen 110 und einer Sicherheitsschiene 112 versehen ist. Das Hebemittel 104 weist hierfür einen Lastarm 114 auf, der mittels eines Befestigungsabschnitts 116 an der Sicherheitsschiene 112 verschiebungssicher befestigt ist. An dem Lastarm 14 ist der Flaschenzug 106 befestigt und zudem ist er an dem Arbeitskorb 102 befestigt, der somit mittels des Flaschenzuges in eine höhere Position gezogen werden kann.

Der Arbeitskorb 102 ist ebenfalls an der Turmleiter 108 verschiebungssicher in einer Arbeitsposition befestigt. Der Flaschenzug 106 bzw. das Hebemittel 104 insgesamt soll den Arbeitskorb 102 nur beim Versetzen desselben in eine höhere Position halten und heben. Damit soll das Hebemittel 104 den Arbeitskorb 102 somit auch im Wesentlichen nur in unbelastetem Zustand, also ohne Arbeitspersonal halten und heben.

Der Arbeitskorb 102 weist ein Geländer 118 mit diversen Anschlagpunkten zum Befestigen des Flaschenzuges 106 zum Heben des Arbeitskorbs 102 auf. Das Geländer 118 ist ansonsten dazu vorgesehen, ein Herausfallen einer Person aus dem Arbeitskorb 102 zu verhindern. Dies wird durch einige Schutzwände 120 unterstützt.

Der Arbeitskorb 102 weist zudem eine klappbare Plattform 122 auf, die als Boden bzw. Bodenabschnitt des Arbeitskorbs 102 dient. In der Figur 1 ist die Plattform 122 in einer zur Seite geklappten Position dargestellt, in der eine Person den Arbeitskorb 102 nach unten verlassen kann. Hierfür gibt die weggeklappte Plattform 122 eine entsprechende Bodenöffnung 124 frei. Die Klapprichtung der Plattform ist durch den Pfeil 126 angedeutet. Weiterhin ist ein schwenkbarer Werkzeugkasten 128 vorgesehen, der bei Bedarf in den Arbeitskorb 102 hinein oder aus ihm heraus geschwenkt werden kann. Gegebenenfalls kann es aus Platzgründen sinnvoll sein, beim Verändern der Position des Arbeitskorbs 102 mittels des Hebemittels 104 den Werkzeugkasten 128 in den Arbeitskorb 102 hinein zu schwenken. Während Arbeiten in dem Arbeitskorb 102 bzw. aus dem Arbeitskorb 102 heraus geführt werden, kann ein Verschwenken des Werkzeugkastens 128 in eine Position außerhalb des Arbeitskorbes 102 in dem Arbeitskorb 102 zusätzlichen Platz schaffen.

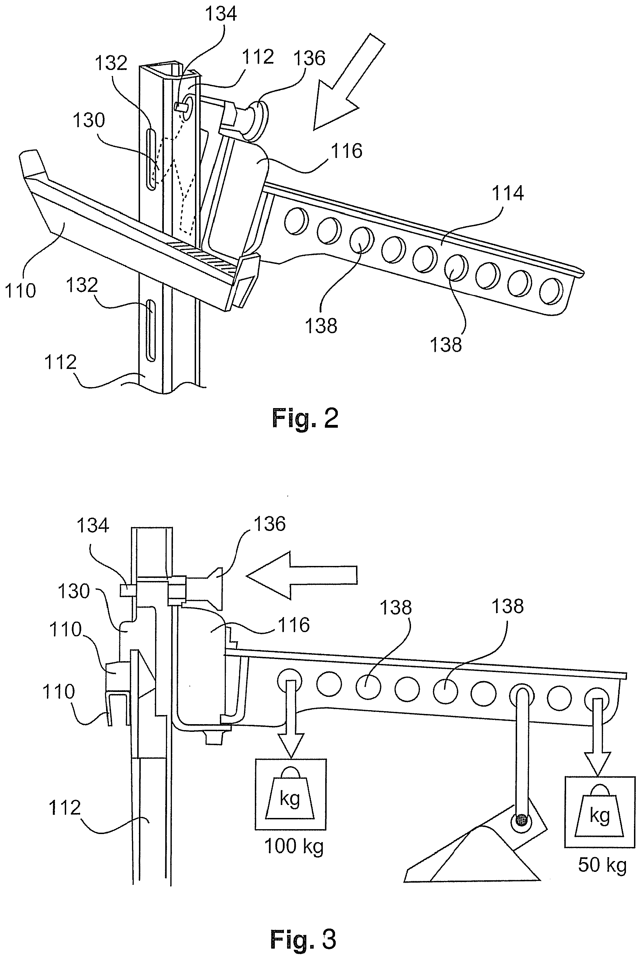

Figur 2 veranschaulicht die Befestigung des Lastarms 114 an der Sicherheitsschiene 112. Der Lastarm 114 wird dabei mittels des Befestigungsabschnittes 116 an der Sicherheitsschiene 112 befestigt. Hierzu weist der Befestigungsabschnitt 116 einen Befestigungshaken 130 auf, der dazu vorgesehen ist, in eine längliche Öffnung 132 einzugreifen, die auch als Langloch bezeichnet werden kann und an der Rückseite der Sicherheitsschiene 112 angeordnet ist. Zum Befestigen wird der Lastarm 114 mit seinem Befestigungsabschnitt 116 und dem Befestigungshaken 130 leicht schräg in die Sicherheitsschiene 112, die als sogenanntes C-Profil ausgeführt ist, eingeführt und etwas nach unten in ihre befestigte Position geschoben. Zum Verhindern des Wiederlösens ist ein Rastbolzen 134 vorgesehen, der in der befestigten Position in dasselbe Langloch 132 eingreift wie der Befestigungshaken 130. Die vollständig eingesetzte Position wird in der Figur 3 in einer Seitenansicht verdeutlicht.

Um den Lastarm 114 wieder aus der Sicherheitsschiene 112 zu lösen, müsste der Rastbolzen 134 manuell an seinem Betätigungskopf 136 durch Ziehen gelöst werden. Die Figur 3 veranschaulicht zudem, dass in dem Lastarm 114 mehrere Befestigungsbohrungen 138 vorgesehen sind, die verschiedene Befestigungspositionen für den Flaschenzug 106 des Hebemittels 104 vorsehen. Unterschiedliche Befestigungsbohrungen 138 können unterschiedliche Gewichte aufnehmen. Zudem kann durch eine geschickte Wahl der Befestigungsbohrung 138 eine günstige Zugrichtung beim Heben des Arbeitskorbes 102 gewählt werden.

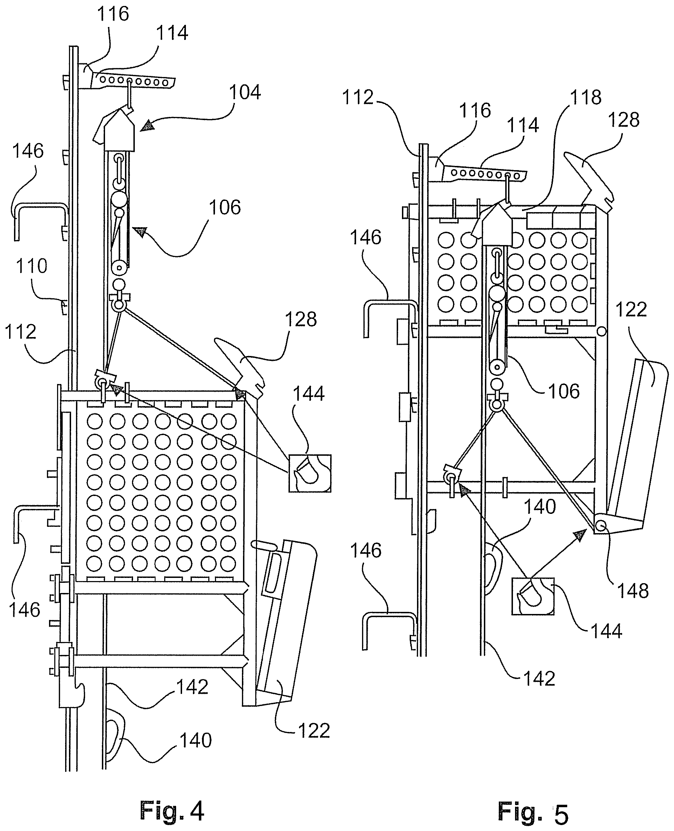

Figur 4 zeigt im Grunde eine Seitenansicht der Situation der Figur 1. Es ist hierbei zudem zu erkennen, dass ein Betätigungsabschnitt 140 an einem Seil 142 des Flaschenzuges 106 befestigt ist, wobei das Seil 142 von einer Position oberhalb des Arbeitskorbs 102 durch den Arbeitskorb 102 hindurch an eine Position unterhalb des Arbeitskorbes 102 reicht. Entsprechend kann der Arbeitskorb 102 von einer Position aus, die unterhalb dieses Arbeitskorbes 102 liegt, in eine höhere Position gezogen und damit gehoben werden. Der Arbeitskorb 102 wird hierbei durch seitliche Führungswangen geführt. Zum Befestigen an dem Arbeitskorb 102, insbesondere an dem Geländer 118 kann das Hebemittel 104 entsprechende gesicherte Haken 144 vorsehen, die auch allgemein als Karabinerhaken bezeichnet werden können. Ein solcher gesicherter Haken 144 ist in der Figur 4 und auch in der Figur 5 beispielhaft in einer Vergrößerung dargestellt. Im Übrigen sind in den Figuren 2, 4 und 5 auch Leiterhalterungen 146 dargestellt, mittels derer die Turmleiter 108 einschließlich Sicherheitsschiene 112 an einer Turminnenwand befestigt wird, wobei diese Leiterhalterung 146 auch zu einem Abstand zwischen der Turmleiter 108 und der betreffenden Turmwand führt.

Figur 5 zeigt eine Situation ähnlich der in Figur 4 dargestellten, wobei der Flaschenzug 106 mit seinen gesicherten Haken 144 an anderen Positionen des Arbeitskorbes 102 befestigt ist. Demnach ist keine Befestigung an dem Geländer 118 gemäß Figur 4 vorgesehen, sondern eine Befestigung an einer Schwenkachse 148, um die Plattform 122 zu schwenken ist und an weiteren Haltestreben 150 des Arbeitskorbes 102. Die Verwendung der Schwenkachse 148 und der Haltestreben 150 zum Anschlag der gesicherten Haken 144 schafft die Möglichkeit, den Arbeitskorb 102 näher an den Lastarm 114 heran zu ziehen. Dies ist besonders dann wichtig, wenn der Arbeitskorb 102 besonders hoch in dem Turm und insbesondere dem obersten gerade zu bearbeitenden Turmsegment gehoben werden soll. Gerade beim Aufbau eines Turmes aus diversen Segmenten kann es vorteilhaft sein, den Arbeitskorb 102 möglichst hoch in dem Turmsegment zu ziehen, um eine bessere Arbeitsposition beim Aufsetzen eines weiteren Turmsegments zu haben. Die Figur 5 zeigt dabei den Arbeitskorb 102 in einer teilweise geschnittenen Ansicht. Der Flaschenzug 106 ist nämlich gemäß der Situation der Figur 5 in dem Arbeitskorb 102 angeordnet und somit erst durch die geschnittene Darstellung erkennbar.

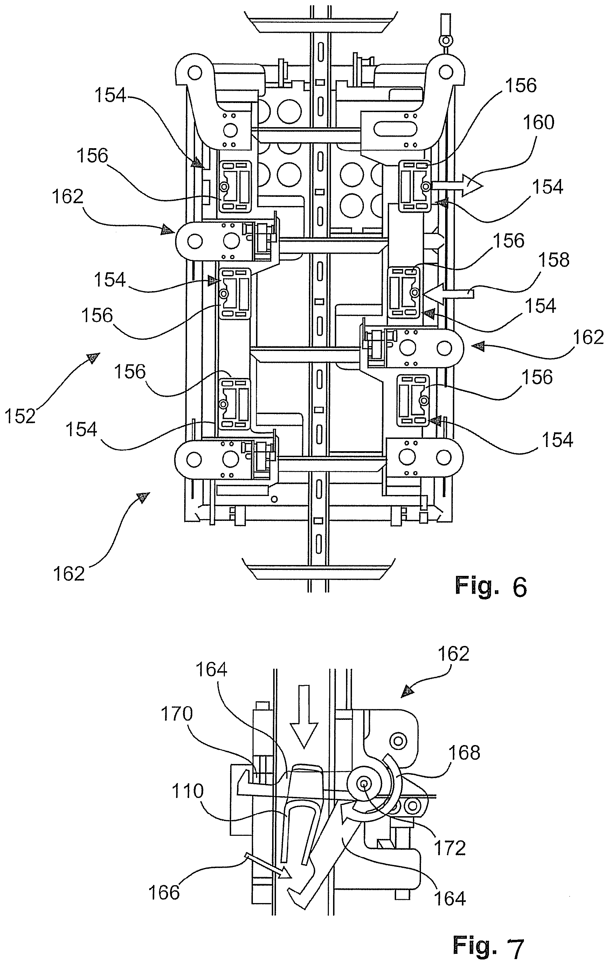

Figur 6 zeigt den Arbeitskorb 102 aus einer Rückansicht, nämlich im Grunde aus Sicht der Turmwand an der die Turmleiter 108 befestigt ist. Figur 6 zeigt somit einen Blick auf eine Korbrückseite 152, die eine Reihe von Befestigungsmitteln aufweist. Der Arbeitskorb ist mittels sechs Verbindungsmitteln 154 an der Korbrückseite 152 befestigt. Jedes Verbindungsmittel 154 umfasst dabei einen Verriegelungsschieber 156, mit dem die Verbindung zwischen Arbeitskorb 102 und Korbrückseite 152 vorgenommen wird. Der Pfeil 158 veranschaulicht dabei eine Bewegung zum Verriegeln und der Pfeil 160 eine Bewegung zum Entriegeln.

Zudem sind drei Auflagehalterungen 162 vorgesehen, die den Arbeitskorb durch Auflage auf jeweils einer Leitersprosse 110 in der Höhe positionieren.

In der Detailansicht der Figur 7 ist eine Auflagehalterung 162 in einer Seitenansicht dargestellt. Die Auflagehalterung weist einen Auflagehebel 164 auf, der in der Figur 7 in zwei Positionen dargestellt ist, nämlich in einer waagerechten Ruheposition und einer schrägen, ausweichenden Position. Der Pfeil 166 deutet auf eine ausweichende Bewegung in die ausgewichene Position. Wird der Arbeitskorb nach oben gezogen und passiert dabei die Auflagehalterung 162 eine Leitersprosse 110, so wird durch diese Aufwärtsbewegung des Arbeitskorbes 102 und damit der Auflagehalterung 162 die Leitersprosse 110 den Auflagehebel 164 in die Ausweichbewegung 160 schieben. Wird die Aufwärtsbewegung fortgesetzt und verlässt dabei die Leitersprosse 110 den Kontaktbereich mit dem Auflagehebel 164, so schwenkt dieser Auflagehebel 164 in der Schwenkbewegung gemäß dem Pfeil 168 zurück. Dabei schlägt der Auflagehebel 164 gegen einen Anschlag 170. Hierzu ist eine Feder im Bereich der Schwenkachse 172 des Auflagehebels 164 angeordnet, die in den Figuren jedoch nicht dargestellt ist.

Wird der Arbeitskorb 102 nun wieder leicht abgesenkt, so kommt der Auflagehebel 164 auf der betreffenden Leitersprosse 110 zu liegen und hält den Arbeitskorb 102. Absenkbewegung wird mit dem Pfeil 174 veranschaulicht.

Soll der Arbeitskorb 102 weiter abgesenkt werden, so muss ein Zurückschwenken des Auflagehebels 164 durch eine entsprechend vorgesehene Blockiervorrichtung verhindert werden. Eine solche Blockiervorrichtung ist vorhanden, wird in den Figuren jedoch nicht veranschaulicht.

## Patentansprüche

1. Arbeitsbühnenvorrichtung (100) zum Arbeiten in veränderlicher Höhe in einem Turm oder Turmabschnitt einer Windenergieanlage, umfassend:
- einen Arbeitskorb (102) zum Aufnehmen einer Person zum Arbeiten in dem Turm in veränderlicher Höhe und
- einen Befestigungsabschnitt (116) zum unfallsicheren Befestigen des Arbeitskorbs (102) an einer mit einer Sicherheitsschiene (112) versehenen Turmleiter (108) und
- ein Hebemittel (104) zum Befestigen an der Turmleiter (108), zum Hochziehen des Arbeitskorbes entlang der mit der Sicherheitsschiene (112) versehenen Turmleiter (108) aus einer ersten Arbeitsposition in eine höher als die erste Arbeitsposition gelegene zweite Arbeitsposition,
wobei das Hebemittel (104) einen Lastarm (114) aufweist, der mittels des Befestigungsabschnitts (116) an der Sicherheitsschiene (112) verschiebungssicher befestigt ist,
wobei der Befestigungsabschnitt (115) einen Befestigungshaken (130) aufweist, der vorgesehen ist, um in eine an einer Rückseite der Sicherheitsschiene (112) angeordnete längliche Öffnung (132) einzugreifen.

2. Arbeitsbühnenvorrichtung (100) nach Anspruch 1, wobei der Arbeitskorb (102) einen Bodenabschnitt aufweist und der Bodenabschnitt so geöffnet werden kann, dass eine Bodenöffnung entsteht, durch die eine erwachsene Person den Arbeitskorb (102) nach unten verlassen kann.

3. Arbeitsbühnenvorrichtung (100) nach Anspruch 2, wobei die Bodenöffnung so ausgebildet ist, dass die Person beim Verlassen des Arbeitskorbes (102) durch die Bodenöffnung, wenn der Arbeitskorb (102) an der Turmleiter (108) befestigt ist, mit einem Sicherheitsgeschirr über einen Sicherheitsschlitten an der Sicherheitsschiene (112) durchgängig gesichert bleiben kann, insbesondere dass die Person den Sicherheitsschlitten beim Verlassen des Arbeitskorbes (102) in der Schiene führen kann.

4. Arbeitsbühnenvorrichtung (100) nach Anspruch 1, wobei das Hebemittel (104) einen Flaschenzug (106) und/oder ein Umlenkmittel zum Umlenken eines Tragseils aufweist, wobei der Flaschenzug (106) bzw. das Umlenkelement zum Befestigen an der Turmleiter (108) oder Sicherheitsschiene (112) vorbereitet ist.

5. Arbeitsbühnenvorrichtung (100) nach einem der Ansprüche 1 bis 4, ferner mit drei Auflagehalterungen (162), die den Arbeitskorb (102) durch Auflage auf jeweils einer Leitersprosse (110) in der Höhe positionieren.

6. Verfahren zum Errichten eines Turms einer Windenergieanlage umfassend die Schritte:
- Anordnen eines ersten Turmsegmentes auf einem Fundament, und
- Anordnen einer Arbeitsbühnenvorrichtung (100) nach einem der Ansprüche 1 bis 6 zum Arbeiten in veränderlicher Höhe in dem Turm bzw. Turmabschnitt an einer Turmleiter (108),
- Aufsetzen eines weiteren Turmsegments auf das erste Turmsegment, und
- Versetzen eines Hebemittels (104) der Arbeitsbühnenvorrichtung (100) an einen oberen Bereich der Turmleiter (108) in dem weiteren Turmsegment und Hochziehen eines Arbeitskorbs (102) der Arbeitsbühnenvorrichtung (100) entlang der Turmleiter (108) in den oberen Bereich der Turmleiter (108), insbesondere manuell.

7. Verfahren nach Anspruch 6, ferner mit den Schritten:
Anordnen einer Wärmvorrichtung am Turmsegment und Abdecken eines ringförmig umlaufenden Stoßbereichs zwischen dem Turmsegment und dem Turmfundament.

## Claims

1. A work platform apparatus (100) for working at a variable height in a pylon or pylon portion of a wind power installation including
- a work cage (120) for accommodating a person for working in the pylon at a variable height, and
- a fixing portion (116) for accident-proof fixing of the work cage (102) to a pylon ladder (108) provided with a safety rail (112),
- a lifting means (104) for fixing to the pylon ladder (108), for pulling up the work cage along the pylon ladder (108) provided with the safety rail (112) from a first working position into a second working position higher than the first working position,
wherein the lifting means (104) comprises a load arm (114), which is non-displacedly fixed to the safety rail (112) by means of the fixing portion (116),
wherein the fixing portion (116) comprises a fixing hook (130) which is configured to engage into an elongated opening (132) at a rear side of the safety rail (112).

2. A work platform apparatus (100) according to claim 1 wherein the work cage (102) has a floor portion and the floor portion can be opened so that there is formed a floor opening through which an adult can leave the work cage (102) in a downward direction.

3. A work platform apparatus (100) according to claim 2 wherein the bottom opening is such that the person when leaving the work cage (102) through the floor opening when the work cage (102) is fixed to the pylon ladder (108) can remain constantly secured with a safety harness by way of a safety slider to the safety rail (112), in particular the person can guide the safety slider in the rail (112) when leaving the work cage (102) .

4. A work platform apparatus (100) according to claim 1 wherein the lifting means (104) has a block and tackle arrangement (106) and/or a deflection means for deflection of a carrier cable, wherein the block and tackle arrangement (106) or the deflection element is adapted for fixing to the pylon ladder (108) or safety rail (112).

5. A work platform according to any one of the claims 1 to 4, further comprising three support holders (162), which position the work cage (102) in respect of height by being supported on a respective ladder ring (110).

6. A method of erecting a pylon of a wind power installation including the steps:
- arranging a first pylon segment on a foundation, and
- arranging a work platform apparatus (100) according to one of claims 1 to 6, for working at a variable height in the pylon or pylon portion on a pylon ladder (108), and
- placing a further pylon segment on the first pylon segment, and
- displacing a lifting means (104) of the work platform apparatus (100) to an upper region of the pylon ladder (108) in the further pylon segment and pulling up a work cage (102) of the work platform apparatus (100) along the pylon ladder (108) into the upper region of the pylon ladder (108), in particular manually.

7. Method according to claim 6, further comprising the steps:
- arranging a heating apparatus on the pylon segment and covering an annularly peripherally extending junction region between the pylon segment and the pylon foundation.

## Revendications

1. Dispositif de plateforme de travail (100) pour travailler à hauteur variable dans une tour ou partie de tour d'une éolienne, comprenant :
- une nacelle de travail (102) pour la réception d'une personne destinée à travailler dans la tour à hauteur variable et
- une partie de fixation (116) pour la fixation anti-accident de la nacelle de travail (102) sur une échelle de tour (108) pourvue d'un rail de sécurité (112) et
- un moyen de soulèvement (104) à fixer sur l'échelle de tour (108), pour le levage de la nacelle de travail le long de l'échelle de tour (108) pourvue du rail de sécurité (112) d'une première position de travail dans une deuxième position de travail située plus haut que la première position de travail,
dans lequel le moyen de soulèvement (104) présente un bras de charge (114), qui est fixé de manière anticoulissante sur le rail de sécurité (112) au moyen de la partie de fixation (116),
dans lequel la partie de fixation (115) présente un crochet de fixation (130), qui est prévu pour s'insérer dans une ouverture longitudinale (132) disposée sur une face arrière du rail de sécurité (112).

2. Dispositif de plateforme de travail (100) selon la revendication 1, dans lequel la nacelle de travail (102) présente une partie de fond et la partie de fond peut être ouverte de sorte qu'une ouverture de fond est obtenue, par laquelle une personne adulte peut quitter la nacelle de travail (102) par le bas.

3. Dispositif de plateforme de travail (100) selon la revendication 2, dans lequel l'ouverture de fond est réalisée de sorte que la personne en quittant la nacelle de travail (102) par l'ouverture de fond, lorsque la nacelle de travail (102) est fixée sur l'échelle de tour (108), peut constamment rester assurée sur le rail de sécurité (112) avec un harnais de sécurité par l'intermédiaire d'un coulisseau de sécurité, en particulier que la personne en quittant la nacelle de travail (102) peut guider le coulisseau de sécurité dans le rail.

4. Dispositif de plateforme de travail (100) selon la revendication 1, dans lequel le moyen de soulèvement (104) présente un palan (106) et/ou un moyen de déviation pour dévier un câble porteur, dans lequel le palan (106) ou l'élément de déviation est destiné à être fixé sur l'échelle de tour (108) ou le rail de sécurité (112).

5. Dispositif de plateforme de travail (100) selon l'une quelconque des revendications 1 à 4, en outre avec trois supports d'appui (162), qui positionnent la nacelle de travail (102) en hauteur par appui sur respectivement un barreau d'échelle (110).

6. Procédé pour construire une tour d'une éolienne comprenant les étapes :
- de disposition d'un premier segment de tour sur une base, et
- de disposition d'un dispositif de plateforme de travail (100) selon l'une quelconque des revendications 1 à 6 pour travailler à hauteur variable dans la tour ou partie de tour sur une échelle de tour (108),
- de mise en place d'un autre segment de tour sur le premier segment de tour, et
- de déplacement d'un moyen de soulèvement (104) du dispositif de plateforme de travail (100) sur une zone supérieure de l'échelle de tour (108) dans l'autre segment de tour et de levage d'une nacelle de travail (102) du dispositif de plateforme de travail (100) le long de l'échelle de tour (108) dans la zone supérieure de l'échelle de tour (108), en particulier manuellement.

7. Procédé selon la revendication 6, en outre avec les étapes :
de disposition d'un dispositif de chauffage sur le segment de tour et de recouvrement d'une zone de jonction périphérique de manière annulaire entre le segment de tour et la base de tour.
